Europäisches Patentamt

European Patent Office

Office européen des brevets

(11) Veröffentlichungsnummer: **0 308 622**

**A1**

## (12) EUROPÄISCHE PATENTANMELDUNG

(21) Anmeldenummer: **88112211.3**

(22) Anmeldetag: **28.07.88**

(51) Int. Cl.⁴: **H02M 3/335 , H04N 5/63**

(30) Priorität: **19.09.87 DE 3731645**

(43) Veröffentlichungstag der Anmeldung:
**29.03.89 Patentblatt 89/13**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Hartmann, Uwe**
**Tallardstrasse 15**
**D-7730 Villingen-Schwenningen(DE)**
Erfinder: **van den Driesche, Michel**
**3 Allée des Eyminées**
**F-38240 Meylan(FR)**
Erfinder: **Mai, Udo**
**Mühleschweg 2**
**D-7730 VS-Villingen 23(DE)**
Erfinder: **Maige, Philippe**
**47 Avenue Aristide Bérgés**
**F-38170 Seyssinet-Pariset(FR)**

(54) **Schaltnetzteil.**

(57) Fernsehempfänger mit einem geregelten Schalt-netzteil.

Der Erfindung liegt die Aufgabe zugrunde, die bekannten Stand-by-Schaltungen noch weiter zu vereinfachen und damit zu verbilligen.

Sowohl auf der Primärseite als auch auf der Sekundärseite des Schaltnezteils ist je eine Regelschaltung (15,16) mit Pulsbreitenmodulator und Regelstufe angeordnet, wobei die primärseitige Regelschaltung (15) im Stand-by-Betrieb in Funktion ist und die sekundärseitige Regelschaltung (16) den Normalbetrieb übernimmt.
Fernsehempfänger

EP 0 308 622 A1

# Schaltnetzteil

Die Erfindung betrifft ein Schaltnetzteil mit einer Regelschaltung, die in Abhängigkeit von der Belastung die den Schalter des Schaltnetzteils ansteuernden Impulse verändert.

Schaltnetzteile werden z.B. in Fernsehgeräten verwendet. Diese sind in der Lage eine niedrige Stand-by-Leistung zu liefern, um dem Empfänger den Empfang von Einschaltsignalen über eine Fernbedienung zu ermöglichen.

Der Erfindung liegt die Aufgabe zugrunde die Stand-by-Leistung auf sehr kostengünstige Weise bereit zu stellen. Diese Aufgabe wird durch die im Patentanspruch angegebene Erfindung gelöst. Weitere vorteilhafte Ausgestaltungen der Erfindung ergeben sich aus den Unteransprüchen.

Nachstehend wird die Erfindung an einem Ausführungsbeispiel mit Hilfe der Zeichnung erläutert.

Figur 1 zeigt ein Blockschaltbild der Erfindung

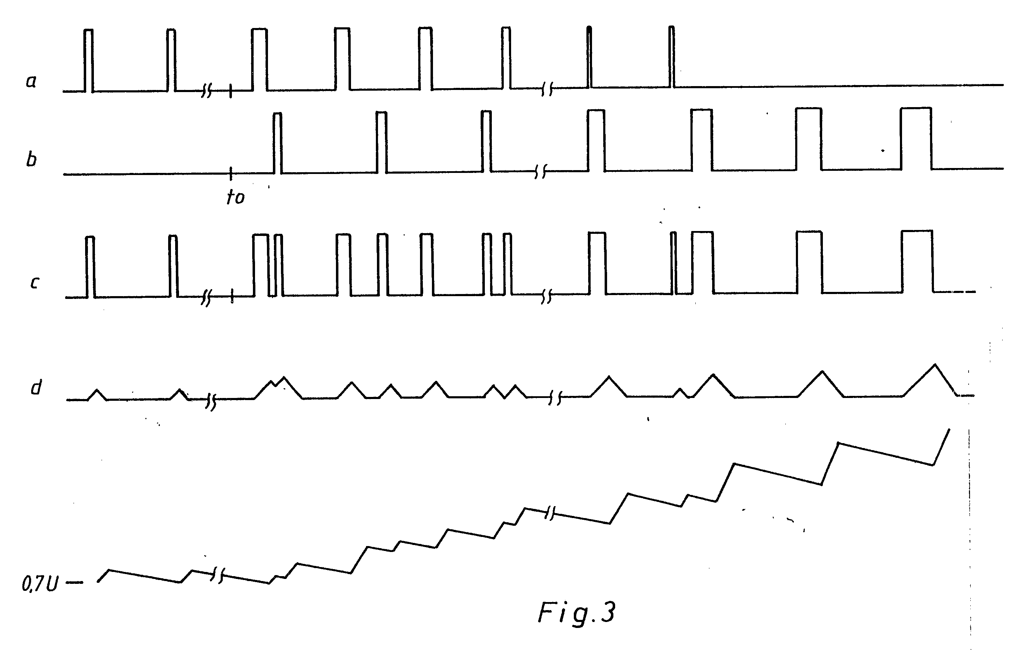

Figuren 2 und 3 zeigen Diagramme zur Erläuterung der Wirkungsweise der Erfindung.

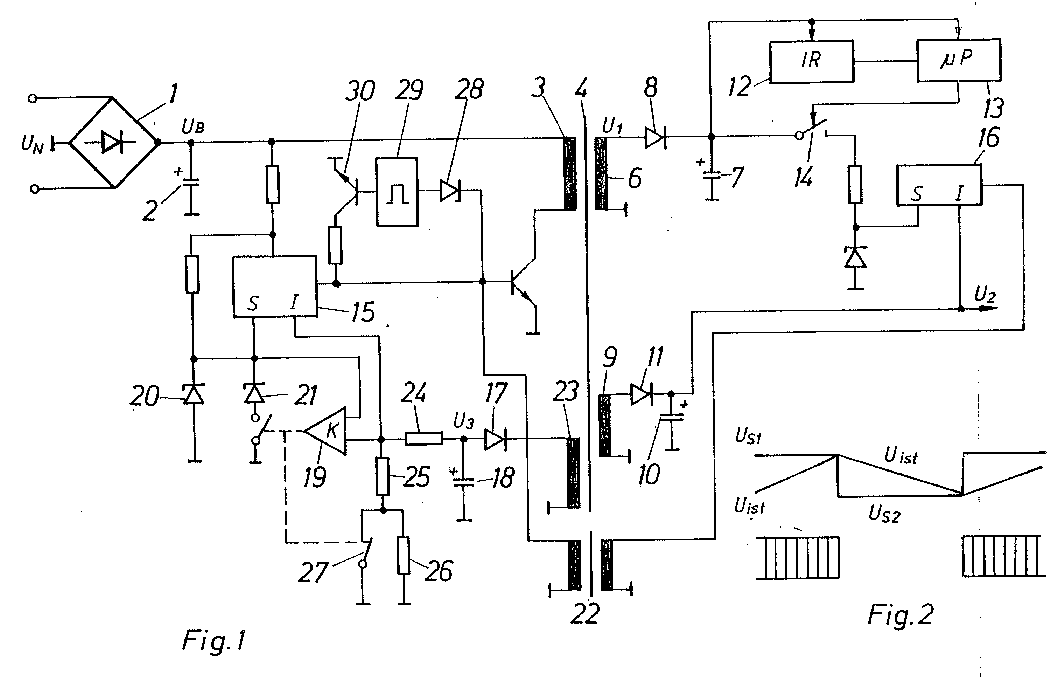

In Figur 1 ist in einem prinzipiellen Aufbau ein Schaltnetzteil dargestellt. Die Netzwechselspannung $U_N$ wird mit Hilfe des Gleichrichters 1 zu einer ungeregelten Betriebsspannung $UB$ gleichgerichtet, die sich am Ladekondensator 2 aufbaut. Diese Betriebsspannung liegt über die Induktivität einer Wicklung 3 des Schaltnetzteiltransformators 4 an einem elektronischen Schalter 5, der die Wicklung 3 periodisch z.B mit Zeilenfrequenz an Bezugspotential legt. Auf der Sekundärseite des Schaltneztteiltransformators 4 befinden sich mehrere Sekundärwicklungen, von denen beispielsweise zwei dargestellt sind. Die Wicklung 6 erzeugt an einem Kondensator 7 über die Diode 8 eine Betriebsspannung $U1$ und die Wicklung 9 an einem Kondensator 10 über die Diode 11 dieBetriebsspannung $U2$. Die Betriebsspannung $U1$ versorgt z.B. den Infrarotverstärker 12 für die Fernbedienung im Stand-by-Betrieb zum Empfang eines Einschaltbefehls sowie einen Mikroprozessor 13, der diesen Befehl ausführt und z.B. einen Schalter 14 schließt. Sowohl auf der Primärseite als auch auf der Sekundärseite des Schaltnetzteiltransformators 4 befinden sich Regelschaltungen 15 und 16, bestehend aus einem Impulsgenerator, einem Pulsbreitenmodulator und einer Regelstufe. Diese Regelschaltungen liefern beim Einschalten des Empfängers kontinuierlich breiter werdende Impulse. Die primärseitige Regelschaltung 15 ist derart ausgelegt, daß eine geregelte Spannung $U3$ über die Sekundärwicklung 23 , Diode 17 am Kondensator 18 entsteht, die unterhalb der sekundär geregelten Spannung $U2$ liegt. Im ausgeschalteten Zustand des Empfängers, d.h. im Stand-by-Betrieb, entstehen Spannungen in ausreichender Größe von z.B. 70 % des Nominalwertes. Beim Einschalten des Empfängers übernimmt die sekundärseitige Regelschaltung 16 die Regelung auf den Nominalwert der Spannungen.

Es wird nun die Wirkungsweise der Schaltungsanordnung in Verbindung mit den Diagrammen nach Figur 2 beschrieben.

Beim Anlegen der Netzspannung $U_N$ baut sich die Spannung UB am Ladekondensator 2 auf. Die Regelschaltung 15 beginnt zu arbeiten und erzeugt Impulse zur Ansteuerung des elektronischen Schalters 5, die kontinuierlich breiter werden. Sobald die Spannung U3 70 % der Nominalspannung erreicht, geht die Schaltung in einen Impulspaketbetrieb über.

Diese Betriebsart ist notwendig, um einen geräuschlosen Stand-byBetrieb zu gewährleisten, da andernfalls durch einzeln auftretende Impulse hörbare Mischfrequenzen entstehen, die über den Schaltnetzteiltransformator 4 abgestrahlt würden. Der Impulspaketbetrieb wird dadurch erreicht, daß mit Hilfe einer Umschaltung der Sollwert der primären Regelschaltung 15 in der Weise verändert wird, daß die Sollspannung $Us1$ um einen bestimmten Betrag auf $Us2$ erniedrigt wird, sobald die Istspannung auf die Sollspannung $Us1$ angestiegen ist, der Betrag richtet sich nach dem erforderlichen zeitlichen Abstand der Impulspakete. Erreicht die Istspannung $U_{ist}$ langsam abfallend den unteren Sollwert $Us2$ , wird die Sollspannung wieder auf den höheren Wert $Us1$ geschaltet. Dieser Vorgang ist in Figur 2 dargestellt und wird von einer Komparatorschaltung 19 gesteuert, die die Istspannung $U_{ist}$ mit der jeweils eingestellten Sollspannung $U_{soll}$ vergleicht. Die Komparatorschaltung 19 schaltet die Sollspannung um, was beispielsweise durch Verändern der durch die Referenzdioden 20 und 21 vorgegebenen Referenzspannungen geschehen kann. Dieser Vorgang erfolgt periodisch, so lange der Empfänger auf Stand-by-Betrieb geschaltet ist.

Der Impulspaketbetrieb kann z.B. auch dadurch erreicht werden, daß der Istspannungswert umgeschaltet wird, indem das Spannungsteilerverhältnis des Spannungsteilers 24, 25, 26 verändert wird. Wenn die Istspannung die Sollspannung erreicht, wird durch Öffnen des Kontaktes 27 der der Komparatorschaltung 19 zugeführte Wert erhöht.

Wird nun vom Stand-by-Betrieb auf den Normalbetrieb umgeschaltet, weil z.B. durch einen Fernsteuerbefehl über den Infrarotvorverstärker 12 und durch den Mikroprozessor 13 der Schalter 14 geschlossen wird, wird die sekundärseitig angeordnete Regelschaltung 16 in Betrieb gesetzt, die über ein netztrennendes Koppelglied 22 die Steuerimpulse auf den elektronischen Schalter 5 gibt. Diese Regelschaltung liefert nun ihrerseits kontinuierlich breiter werdende Impulse zusätzlich zu den von der primärseitig angeordneten Regelschaltung 15 gelieferten Impulse. Dadurch werden die erzeugten Sekundärspannungen U1 bis U3 vergrößert. Die Regelschaltung 15 verringert nun automatisch die Impulsbreite bis zum Wert Null, weil der ihr vorgegebene Sollwert überschritten ist. Von nun ab übernimmt nur noch die sekundärseitige Regelschaltung 16 die Ansteuerung des elektronischen Schalters 5.

Beim Ausschalten des Empfängers wird gleichzeitig die sekundärseitige Regelschaltung 16 ausgeschaltet. Die primärseitige Regelschaltung 15 übernimmt die Ansteuerung des elektronischen Schalters und hält die erzeugten Betriebsspannungen auf 70 % ihres Nominalwertes. In Figur 2 ist zur Erläuterung der Wirkungsweise der Schaltungsanordnung nach Figur 1 der Zeitraum dargestellt, in welchem von Stand-by-Betrieb auf den Normalbetrieb umgeschaltet wird und die Regelung von der Sekundärseite des Schaltnetzteils übernommen wird. Bis zum Zeitpunkt t0 läuft der Empfänger auf Stand-by-Betrieb. Die erzeugten Betriebsspannungen U befinden sich auf 70 % ihres Nominalwertes. In diesem Moment wird der Empfänger auf Normalbetrieb geschaltet. Die sekundärseitige Regelschaltung 16 liefert nun in ihrer Breite anwachsende Steuerimpulse b, die zusätzlich zu den primärseitig erzeugten Impulsen a an die Steuerelektrode des elektronischen Schalters 5 gelangen. Es ergeben sich Impulse c. Bei d ist der Schalterstrom des elektronischen Schalters 5 aufgezeichnet. Man erkennt, daß mit Breiterwerden der Impulse b die Breite der Impulse a abnimmt. Die Betriebsspannung nimmt stetig zu, bis sie 100 % ihres Nominalwertes erreicht hat.

Um zu verhindern, daß der Einschaltvorgang zu abrupt erfolgt, z.B. nach Ansprechen einer Schutzschaltung und darauffolgender Wiedereinschaltung, wodurch der Kollektorstrom des elektronischen Schalters unzulässig hoch ansteigen könnte, kann die Sollspannung kontinuierlich ansteigend gestaltet werden. Dadurch ist es möglich, daß ein beliebig einsetzendes Einschalten auf der Primärseite ausgeregelt wird und die Betriebsspannungen langsam auf ihren Nominalwert hochlaufen.

Um zu verhindern, daß durch Unzulänglichkeiten des Schaltnetzteiltransformators beim Unterbrechen des elektronischen Schalters entstehende Spannungsspitzen diesen zerstören, kann eine Schaltung vorgesehen werden, die ein Wiedereinschalten des elektronischen Schalters für die Dauer dieser Spannungsspitzen verhindert. Eine derartige Schaltung kann z.B. aus einem Zeitglied bestehen, das von einem Kondensator oder einem digitalen Zähler gebildet wird.

Eine dazu geeignete Schaltungsmaßnahme ist in Figur 1 dargestellt. Die Spannungsspitzen werden am Kollektor des Schalters 5 über eine Zenerdiode 28 an eine monostabile Kippstufe 29 gelegt, welche einen Schalter 30 betätigt, der die Ansteuerimpulse momentan unterbricht

## Ansprüche

1. Schaltnetzteil mit einer Regelschaltung, die in Abhängigkeit von der Belastung die den Schalter des Schaltnetzteils ansteuernden Impulse verändert, **dadurch gekennzeichnet**, daß sowohl der Primärseite als auch der Sekundärseite des Schaltnetzteils je eine Regelschaltung (15, 16) mit Pulsbreitenmodulator und Regelstufe zugeordnet sind.

2. Schaltnetzteil nach Anspruch 1, **dadurch gekennzeichnet**, daß die Betriebsfrequenzen von primärer Regelschaltung (15) und sekundärer Regelschaltung (16) unterschiedlich sind.

3. Schaltnetzteil nach Anspruch 1 und 2, **dadurch gekennzeichnet**, daß die Regelschaltung (15) während eines Bereitschaftsbetriebs (Standby) eingeschaltet und die Regelschaltung (16) ausgeschaltet ist.

4. Schaltnetzteil nach Anspruch 1, 2 und 3, **dadurch gekennzeichnet**, daß die Regelschaltung (15) während des Bereitschaftsbetriebs Impulspakete liefert.

5. Schaltnetzteil nach Anspruch 1, 2, 3 und 4, **dadurch gekennzeichnet**, daß die Regelschaltung (16) während des Normalbetriebs eingeschaltet ist, während dessen die Regelschaltung (15) unwirksam ist.

6. Schaltnetzteil nach den Ansprüchen 1 bis 5, **dadurch gekennzeichnet**, daß während des Übergangs von Bereitschaftsbetrieb auf Normalbetrieb die Regelschaltung (15) frequenzbestimmend ist.

7. Schaltnetzteil nach Anspruch 4, **dadurch gekennzeichnet**, daß die Sollspannung für die Regelschaltung (15) umschaltbar ist.

8. Schaltnetzteil nach Anspruch 4, **dadurch gekennzeichnet**, daß die Istspannung für die Regelschaltung (15) umschaltbar ist.

9. Schaltnetzteil nach Anspruch 7, **dadurch gekennzeichnet**, daß die Sollspannung für die Regelschaltung (15) in der Weise umschaltbar ist, daß bei Erreichen der Ist-Spannung an den Sollwert $U_{S1}$ auf einen niedrigeren Sollwert $U_{S2}$ umgeschaltet wird, und daß die Ansteuerimpulse für den elektronischen Schalter (5) so lange unterdrückt werden, bis die Ist-Spannung die niedrigere Sollspannung $U_{S2}$ erreicht, wonach die Sollspannung auf den höheren Wert $U_{S1}$ umgeschaltet wird und eine erneute Ansteuerung des elektronischen Schalters (5) mit kontinuierlich sich verbreiternden Impulsen erfolgt.

10. Schaltnetzteil nach Anspruch 8, **dadurch gekennzeichnet**, daß die Istspannung für die Regelschaltung (15) in der Weise umschaltbar ist, daß bei Erreichen der Istspannung an den Sollwert auf einen höheren Istspannungswert umgeschaltet wird, und daß die Ansteuerungsimpulse für den elektronischen Schalter (5) so lange unterdrückt werden, bis die Istspannung die Sollspannung erreicht, wonach die Istspannung wieder auf den niedrigeren Wert umgeschaltet wird und eine erneute Ansteuerung des elektronischenSchalters (5) mit kontinuierlich sich verbreiternden Impulsen erfolgt.

11. Schaltnetzteil nach den Ansprüchen 1 bis 10, **dadurch gekennzeichnet**, daß der Schalter (5) während des Aufretens von Spannungsspitzen aus dem Schaltnetzteiltransformator (4) gesperrt wird.

Fig.1

Fig.2

$U_N$    $U_B$    30   29   28    3   4   $U_1$   8    12   IR   μP   13   16

1   2   6   7   14   S   I

15   S   I

20   21   24   17   23   9   11   $U_2$

19   K   25   $U_3$   18   10

27   26   22

$U_{S1}$   $U_{ist}$   $U_{ist}$   $U_{S2}$

EP 0 308 622 A1

*Fig.3*

a

b

to

c

d

0,7U —

EP 0 308 622 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 683 528 (D.R. SNOW et al.)<br>* Spalte 5, Zeilen 29-42; Figur 1 *<br>--- | 1 | H 02 M 3/335<br>H 04 N 5/63 |
| A | EP-A-0 193 435 (J. SARTRE)<br>* Zusammenfassung *<br>----- | | |

RECHERCHIERTE SACHGEBIETE (Int. Cl.4)

H 02 M
H 04 N

Der vorliegende Recherchenbericht wurde für alle Patentansprüche erstellt

| Recherchenort | Abschlußdatum der Recherche | Prüfer |
|---|---|---|
| DEN HAAG | 30-11-1988 | MOUEZA, A.J.L. |